# EUROPEAN PATENT APPLICATION

(11) **EP 1 392 045 A1**
(43) Date of publication of application: **25.02.2004**
(21) Application number: 03017648.1
(22) Date of filing: 12.08.2003
(51) Int. Cl.: H04N 1/21

(54) **Alert generating system and method for a digital camera embedded in a mobile communication terminal**

(30) Priority: 17.08.2002 KR 2002048738
(71) Applicant: LG ELECTRONICS INC., Seoul (KR)
(72) Inventor: Mun, Chang-Ho, Songpa-Gu, Seoul (KR)
(74) Representative: von Hellfeld, Axel, Dr.

(57) **Abstract**

An alerting mechanism is provided. The alerting mechanism comprises an alert producing unit in communication with a controller of a mobile communication terminal, wherein an alert is generated when a digital recording process is initiated. The alert can be an audio alert, a visual alert or both. In some embodiments, the digital recording process may not be initiated if the alert producing unit is inoperable. The alert is generated for the duration of the digital recording.

## Description

### BACKGROUND OF THE INVENTION

### Field of the Invention

The present invention relates to a mobile communication terminal having a digital camera and, more particularly, to an apparatus and method for controlling photographing of digital camera in a mobile communication terminal having a digital camera.

### Description of the Background Art

With the advent and progress of embedded technology in handheld communication devices, particularly the availability of high-capacity internal memory and faster processing units, the newer handheld communication devices, such as mobile cellular terminals have various integrated feature. For example, a moving picture as well as a still picture can be displayed.

Some mobile communication terminal also include digital cameras with high-resolution graphic capabilities. As the display function, the internal processing capability and the memory extension of the mobile communication terminal have been enhanced, the mobile communication terminal also can be used as a digital camera by adding a supplementary image sensor-related module to the existing functions of the mobile communication terminal. A detachable mobile camera or a mobile communication terminal having an internal camera has been already commercialized.

The digital camera inserted in the mobile communication terminal can be utilized in various ways. As a user carries the mobile communication terminal most time, he/she can store a still picture or a moving picture any time anywhere. Thus, the user may take a picture of an incident as well as other general photos. In addition, discovering some interests, the user can store them as a still picture or a moving picture for analysis or research.

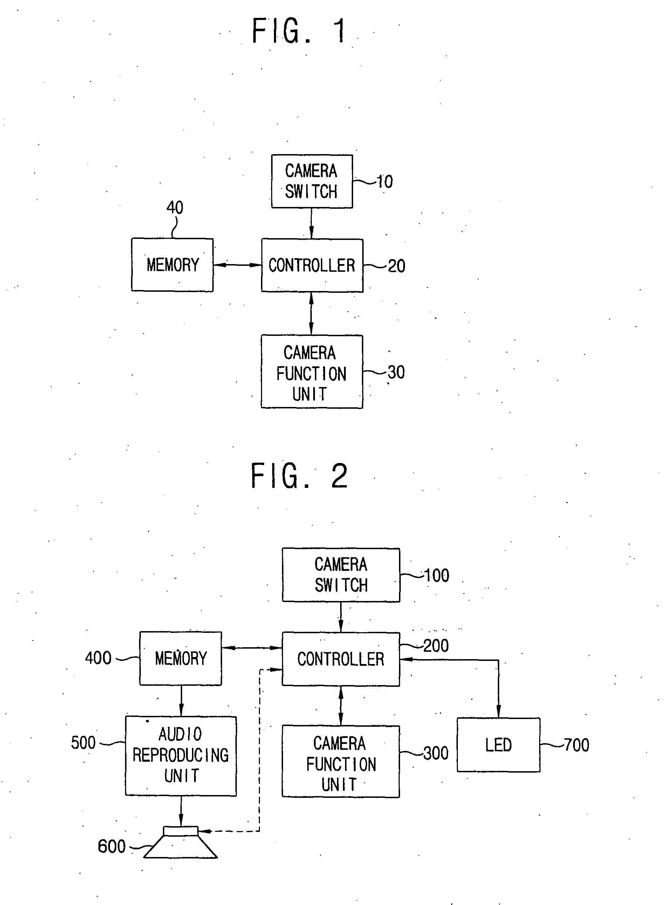

Referring to Figure 1, a mobile communication terminal may include a camera switch 10 for receiving an input of a user; a controller 20 for controlling a camera's operation according to an output of the camera switch 10; a camera function unit 30 for converting an external image into certain digital image data under the control of the controller 20; and a memory 40 for storing the converted digital image data.

The mobile communication terminal may use an additionally provided key different from an existing key, as the camera switch 10, or may use a certain key of existing keys, as the camera switch 10 according to menu selection. When the camera switch 10 is manipulated by the user, the controller 20 drives the camera function unit 30. The camera function unit 30, including a camera sensor and image processors, converts an image sensed by the camera sensor into a digital image data and stores the converted digital image data in a certain region of the memory 40.

In this manner, the digital camera-inserted mobile communication terminal can store a still picture and even a moving picture selectively. Accordingly, the mobile communication terminal can store desired scene any time by using an external or the internal digital camera. However, when a still picture or a moving picture is taken by using the external or internal digital camera of the general mobile communication terminal, the mobile communication terminal does not perform any function to let others know the photographing, so that others can hardly be aware of the photographing.

Therefore, someone may be photographed without knowing it and this causes a problem of invasion of privacy. In addition, important facilities or secret matters of an industrial site or military installations may be photographed arbitrarily without restriction, causing a problem that an industrial/military secrecy may be compromised.

The above references are incorporated by reference herein where appropriate for appropriate teachings of additional or alternative details, features and/or technical background.

### SUMMARY OF THE INVENTION

In accordance with one or more embodiments of the invention, an alerting mechanism comprising an alert producing unit in communication with a controller of a mobile communication terminal, wherein an alert is generated when a digital recording process is initiated. The alert can be an audio alert, a visual alert or both. In some embodiments, the digital recording process may not be initiated if the alert producing unit is inoperable. The alert is generated for the duration of the digital recording.

Accordingly, an apparatus for controlling a digital camera in a mobile communication terminal may comprise a camera switch for instructing a camera operation; a photographing state informing function unit for informing of a photographing state; a camera function unit for converting an external image into a digital image data; and a controller for checking whether the photographing state informing function unit is in a normal state when an operation of the camera switch is detected, and driving the photographing state informing function unit and the camera function unit if the photographing state informing function unit is in the normal state. A memory for storing information to be provided to the photographing state informing function unit and the converted digital image data may be also included.

The photographic state informing function unit comprises an audio reproducing unit for reproducing at least one of a stored voice message and a sound. A light emitting diode for displaying a photographing state with a certain lighting pattern may be also included. A flash for identifying a photographing state could be also included in one or more embodiments. The camera switch includes an external key, an internal specific key or a soft key.

In accordance with another embodiment, a method for controlling a digital camera in a mobile communication terminal comprises examining a photographing state informing function unit when a camera function is selected; terminating a photographing state, if the photographing state informing function unit is not in a normal state; and continuing with the photographing state, if the photographing state informing function unit is in a normal state. The camera function selecting represents detecting operation of the camera switch or selecting of camera photographing menu. The photographing state informing function unit comprises an audio reproducing unit for reproducing a sound; a speaker for outputting the sound; and a light emitting diode for emitting a lighting pattern.

In one embodiment, a state of the speaker or the light emitting diode is determined before the photographing can be initiated. If the photographing is initiated then at least one of a sound, a light, and a flash is generated to inform a party of the initiation of the photographing. If the state of the speaker or the light emitting diode is in a first state then the photographing may not be initiated.

In certain embodiments, the sound is prerecorded in a memory and can be selected from a plurality of stored sounds. Also, a preset pattern can be used for emitting the light of the diode. The pattern is selected from a plurality of light patterns. At least one of the sound, light, and the flash continue to operate during a period of video recording performed by the digital camera, in certain embodiments.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

The invention will be described in detail with reference to the following drawings in which like reference numerals refer to like elements wherein:

Figure 1 illustrates a mobile communication terminal having a general digital camera, according to the related art;

Figure 2 illustrates a block diagram of an apparatus for controlling photographing of a digital camera in a mobile communication terminal, in accordance with one embodiment of the present invention; and

Figure 3 is a flow chart of a method of controlling photographing of a digital camera in a mobile communication terminal, in accordance with one or more embodiments.

Features, elements, and aspects of the invention that are referenced by the same numerals in different figures represent the same, equivalent, or similar features, elements, or aspects in accordance with one or more embodiments of the system.

### DETAILED DESCRIPTION OF THE PREFERRED EMBODIMENTS

The present invention, in one or more embodiments, is directed to informing people of photographing when photographing is performed by using an external or internal digital camera of a mobile communication terminal. A mobile communication terminal with an external or internal digital camera has an excellent portability and manipulation property, so that photographing by using the digital camera is preferred to be limited by restricting a function of the digital camera by using functions of the mobile communication terminal.

Referring to Figure 2, an apparatus for controlling photographing of digital camera in a mobile communication terminal, having a digital camera in accordance with the present invention, comprises an audio reproducing unit 500, an external speaker 600 and a light emitting diode (LED) 700.

Also included are camera switch 100 for instructing a camera operation; a controller 200 for checking whether a pre-set photographing state informing function is in a normal state when an operation of the camera switch 100 is detected, and controlling the operation of the camera if the photographing state informing function is in the normal state; a camera function unit 300 for converting an external image into a digital image data under the control of the controller 200; and a memory 400 for storing a voice message or a sound for informing a photographing state and storing the converted digital image data.

The audio reproducing unit 500 is for reproducing the stored voice message or the sound under the control of the controller 200. The speaker 600 reproduces a voice message or the sound. The light emitting diode 700 is for displaying the photographing state in a certain pattern under the control of the controller 200. In some embodiments, the mobile communication terminal may use an additional key, different from an existing key, as the camera switch 10, or may use a soft key or a certain key of existing keys, as the camera switch 10 according to menu selection.

In one or more embodiments, when an input of a camera switch 100 is detected, the controller 200 checks whether a photographing state informing function is in a normal state or not. If the photographing state informing function is the normal state, the controller 200 performs the photographing state informing function and at the same time performs a photographing. If, however, the photographing state informing function is not in the normal state, the controller 200 terminates the photographing procedure.

The photographing state informing function includes at least one of a function of outputting a voice message or a sound informing a photographing state through the speaker 600 of the mobile communication terminal, a function of outputting a light emitting pattern informing a photographing state through a light emitting diode 700, and a flash function for outputting a light to inform a photographing state through a flash (not shown).

Thus, in one embodiment when a still picture is taken, a voice message or a sound can be outputted before or at the time of taking a still picture. As the voice message, a message such as 'taking a picture is started' can be used. As the sound, a specific melody can be used, for example. The voice message or the sound can be selected by a user from among a plurality of messages or sounds, for example. In case of taking a moving picture, a voice message or a sound can be consecutively reproduced, during the video recording.

In other embodiments, for example, a certain light emitting pattern can be generated before or at the time of taking a still picture. The light emitting pattern can be selected by the user from plural patterns, for example. In case of taking a moving picture, the selected pattern can be continuously emitted during the video recording.

The user may try to arbitrarily change the photographing state informing function for the purpose of secret photographing. For example, the user may paralyze the photographing state informing function by cutting out a line of the speaker 600, by stopping an external output function of the speaker 600 by connection of an earphone, or by removing the light emitting diode 700.

In order to prevent a user from paralyzing the photographing state informing function, the following function is provided in one or more embodiments. The controller 200 can check whether the line of the speaker 600 has been cut out by performing an operation of measuring a specific resistance of the speaker 600. In addition, when an input of the camera switch 100 is detected, the speaker 600 is operated regardless of connection of the earphone. In addition, in the present invention, whether the light emitting diode 700 is in a normal state can be checked by measuring a specific resistance or a specific voltage drop of the light emitting diode 700. Also whether the flash is in a normal state can be checked by measuring a specific resistance of the flash. If any of the above alerting features is not functional, then the photographing feature is disabled.

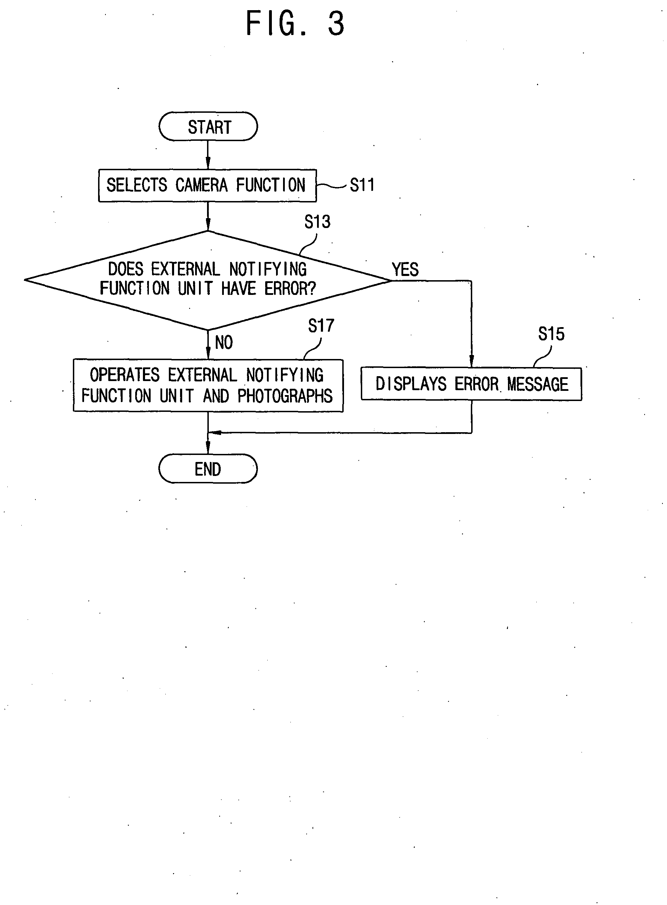

Referring to Figure 3, when an input of the camera switch 100 is detected, the controller checks whether the photographing state informing function is in a normal state (steps S11 and S13). If the voice/sound output function and the light emitting function are all set as the photographing state informing function, the controller 200 checks whether the speaker 600 and the light emitting diode 700 are normal. If the speaker 600 and the light emitting diode 700 are not normal, the controller 200 outputs an error message and does not perform a photographing operation (step S15). If, however, the speaker 600 and the light emitting device 700 are normal, the controller 200 drives the photographing state informing function and performs the photographing (step S17).

In one embodiment, the audio reproducing unit 500 fetches a voice message or a sound informing of the photographing state from the memory 400 and reproduces the fetched voice message or the sound under the control of the controller 200. The speaker 600 outputs the reproduced voice message or the sound externally.

If the photographing is started, a pre-set voice message or sound is outputted through the speaker 600, for example. The light emitting diode 700 outputs a certain light emitting pattern informing the photographing state under the control of the controller 200. At the same time, the camera function unit 300 performs a photographing by converting an image sensed by the image sensor into a digital image data under the control of the controller 200.

The apparatus and method for controlling photographing of digital camera in a mobile communication terminal having digital camera according to the present invention have the following advantages. When a camera operation instruction is detected, the photographing state informing function unit including the speaker, the light emitting diode and the flash is driven together with the camera function unit simultaneously. Accordingly, a photographing-subject person or people around the photographing site can be informed of the photographing fact.

In addition, when the camera operation instruction is detected, the photographing state informing function unit is checked to determine whether it is in a normal state, and then photographing is allowed only when the photographing state informing function unit is in the normal state. Therefore, secret photographing can be prevented and thus a privacy and an industrial/military secret information can be protected.

The embodiments described above are to be considered in all aspects as illustrative only and not restrictive in any manner. Thus, other exemplary embodiments, system architectures, platforms, and implementations that can support various aspects of the invention may be utilized without departing from the essential characteristics described herein. These and various other adaptations and combinations of features of the embodiments disclosed are within the scope of the invention. The invention is defined by the claims and their full scope of equivalents.

## Claims

1. An apparatus for controlling a digital camera in a mobile communication terminal, the apparatus comprising:
a camera switch for instructing a camera operation;
a photographing state informing function unit for informing of a photographing state;
a camera function unit for converting an external image into a digital image data; and
a controller for checking whether the photographing state informing function unit is in a normal state when an operation of the camera switch is detected, and driving the photographing state informing function unit and the camera function unit if the photographing state informing function unit is in the normal state.

2. The apparatus of claim 1 further comprising:
a memory for storing information to be provided to the photographing state informing function unit and the converted digital image data.

3. The apparatus of claim 1, wherein the photographic state informing function unit comprises:
an audio reproducing unit for reproducing at least one of a stored voice message and a sound.

4. The apparatus of claim 3 further comprising:
a light emitting diode for displaying a photographing state with a certain

5. The apparatus of claim 3, further comprising:
a flash for identifying a photographing state.

6. The apparatus of claim 1, wherein the camera switch includes an external key, an internal specific key or a soft key.

7. A method for controlling a digital camera in a mobile communication terminal, the method comprising:
examining a photographing state informing function unit when a camera function is selected;
terminating a photographing state, if the photographing state informing function unit is not in a normal state; and
continuing with the photographing state, if the photographing state informing function unit is in a normal state.

8. The method of claim 7, wherein the camera function selecting represents detecting operation of the camera switch or selecting of camera photographing menu.

9. The method of claim 7, wherein the photographing state informing function unit comprises:
an audio reproducing unit for reproducing a sound;
a speaker for outputting the sound; and
a light emitting diode for emitting a lighting pattern.

10. The method of claim 9 wherein the photographing state information function unit, further comprises a flash.

11. The method of claim 9, wherein the examining step comprises:
determining a state of the speaker; and
determining a state of the light emitting diode.

12. The method of claim 7, wherein the continuing step comprises at least one of producing a sound, emitting a light, and flashing a flash.

13. The method of claim 12, wherein the sound is prerecorded in a memory.

14. The method of claim 13, wherein the sound can be selected from a plurality of stored sounds.

15. The method of claim 12, wherein a preset pattern is used for emitting the light.

16. The method of claim 15, wherein the pattern is selected from a plurality of light patterns.

17. The method of claim 12, wherein at least one of the sound, light, and the flash continue to operate during a period of video recording performed by the digital camera.

18. An alerting mechanism comprising an alert producing unit in communication with a controller of a mobile communication terminal, wherein an alert is generated when a digital recording process is initiated.

19. The alerting mechanism of claim 18, wherein the alert is an audio alert.

20. The alerting mechanism of claim 18, wherein the alert is a visual alert.

21. The alerting mechanism of claim 18, wherein the digital recording process may not be initiated if the alert producing unit is inoperable.

22. The alerting mechanism of claim 18, wherein the alert is generated for the duration of the digital recording.
